# EUROPEAN PATENT APPLICATION

(11) **EP 4 793 144 A1**
(43) Date of publication of application: **19.08.2026**
(21) Application number: 25180254.2
(22) Date of filing: 02.06.2025
(51) Int. Cl.: B62D 25/14, B62D 29/00

(54) **COWL ASSEMBLY**

(30) Priority: 14.02.2025 KR 20250019458
(71) Applicant: Hyundai Mobis Co., Ltd., Gangnam-gu Seoul 06141 (KR)
(72) Inventor: CHOI, Ik Keun, 16891 Yongin-si (KR)
(74) Representative: Vossius & Partner Patentanwälte Rechtsanwälte mbB

(57) **Abstract**

A cowl assembly according to one embodiment of the present invention may include a center cowl including a center pipe extending in a width direction of a vehicle body and a side cowl including a side pipe which is detachably attachable to the center pipe, wherein at least a portion of the center pipe may be inserted into the side pipe, and a first fastening member passing through the center pipe and the side pipe in a state in which the center pipe is inserted into the side pipe may fix the center cowl to the side cowl.

## Description

### CROSS-REFERENCE TO RELATED APPLICATION

This application claims priority to and the benefit of Korean Patent Application No. 10-2025-0019458, filed on February 14, 2025, the disclosure of which is incorporated herein by reference in its entirety.

### BACKGROUND

### 1. Field of the Invention

The present invention relates to a cowl assembly, and more specifically, to a cowl assembly which may be manufactured in an assembly manner.

### 2. Discussion of Related Art

In general, a cowl crossbar is a reinforcing component installed on a rear surface of an instrument panel of a vehicle body and serves to guide and support a steering shaft, the instrument panel, an air conditioning system, an airbag, and cockpit electrical components such as car audio.

In particular, a cowl crossbar is a frame installed on a cowl of a vehicle to prevent twisting or bending in a left-right direction and increase stiffness, thereby safely protecting passengers when a vehicle collision accident occurs.

A cowl extends in the front of a vehicle in a vehicle width direction. The cowl corresponds to a relatively large sized component, and manufacturing and assembly of the cowl require much cost and effort. In addition, when a design of a vehicle is changed, manufacturing of a cowl assembly according to new specifications corresponding thereto is required, and it is required to reduce the cost and effort of manufacturing the new cowl assembly.

### SUMMARY OF THE INVENTION

One embodiment of the present invention is directed to providing a cowl assembly which is formed to be assembled to reduce manufacturing cost and effort and of which a design is easily changed.

Objects to be solved by the present invention are not limited to the above-described objects, and other objects that have not been described above will be clearly understood by those skilled in the art through the following description.

One aspect of the present invention provides a cowl assembly including a center cowl including a center pipe extending in a width direction of a vehicle body and a side cowl including a side pipe which is detachably attachable to the center pipe, wherein at least a portion of the center pipe is inserted into the side pipe, and a first fastening member passing through the center pipe and the side pipe in a state in which the center pipe is inserted into the side pipe fixes the center cowl to the side cowl.

According to some embodiments, the side cowl may include a first side cowl disposed in front of a driver's seat and a second side cowl disposed in front of a passenger seat.

According to some embodiments, the center cowl may include a center bracket which surrounds an outer side of the center pipe and slides on and is assembled to a surface of an outer perimeter of the center pipe, and the side cowl may include a side bracket which surrounds an outer side of the side pipe and slides on and is assembled to a surface of an outer perimeter of the side pipe.

According to some embodiments, fastening holes disposed at predetermined distances may be formed in the center pipe and the side pipe, and the bracket may slide to a location corresponding to the fastening holes and then be fixed by a fastening member.

According to some embodiments, at least a portion of the side pipe corresponding to a shape of a cockpit may be formed to be bent.

According to some embodiments, a support rib may be formed inside each of the center pipe and the side pipe.

According to some embodiments, a steel stiffener may be insertion-injected to form each of the center pipe and the side pipe.

According to some embodiments, the center pipe and the side pipe may be integrally formed, and the center bracket and the side bracket may slide on the pipe and be fastened at predetermined locations.

According to some embodiments, a fixing bracket which fixes the side cowl to the vehicle body may be fastened to an end of the side pipe, and the side pipe may be fastened to the fixing bracket in a state in which at least a portion of the side pipe is inserted into the fixing bracket.

### BRIEF DESCRIPTION OF THE DRAWINGS

The above and other objects, features and advantages of the present invention will become more apparent to those of ordinary skill in the art by describing exemplary embodiments thereof in detail with reference to the accompanying drawings, in which:
FIG. 1 is a perspective view illustrating a cowl assembly according to an embodiment of the present invention;
FIG. 2 is an exploded view illustrating the cowl assembly according to the embodiment;
FIG. 3 is a view illustrating a center cowl of the cowl assembly according to the embodiment;
FIGS. 4 and 5 are views illustrating side cowls of the cowl assembly according to the embodiment;
FIG. 6 is a view illustrating a pipe of the cowl assembly according to the embodiment;
FIG. 7 is a view illustrating a cowl assembly formed by bending a pipe according to an embodiment;
FIG. 8 is a view illustrating a cowl assembly with which a pipe is integrally formed according to an embodiment;
FIGS. 9 to 11 are views illustrating fastening portions of a pipe and a bracket according to an embodiment; and
FIG. 12 is cross-sectional views illustrating pipes according to embodiments.

### DETAILED DESCRIPTION OF EXEMPLARY EMBODIMENTS

Since the present invention may be variously modified and have several embodiments, specific embodiments will be illustrated in the accompanying drawings and described in detail. However, this is not intended to limit the present invention to the specific embodiments, and it should be appreciated that all changes, equivalents, and substitutes falling within the spirit and technical scope of the present invention are encompassed in the present invention. In the description of the embodiments, certain detailed descriptions of the related art will be omitted when it is deemed that they may unnecessarily obscure the gist of the inventive concept.

Terms such as "first" and "second" may be used to describe various components, but the components are not limited by the above terms. These terms are used only to distinguish one component from another.

Terms used herein are only for the purpose of describing particular embodiments and are not intended to limit the present invention. Singular forms are intended to include the plural forms, unless the context clearly indicates otherwise. In the present specification, it should be understood that terms such as "comprise" and "include" specify the presence of stated features, numbers, steps, operations, elements, components, or combinations thereof but do not preclude the presence or addition of one or more other features, numbers, steps, operations, elements, components, or combinations thereof.

In addition, throughout the specification, when components are "connected," this may not only mean that two or more components are directly connected, but may also mean that two or more components are indirectly connected through other components or are physically connected and also electrically connected, or are one component even when referred to by different names according to positions or functions thereof.

In addition, when a first component is described as being formed or disposed "on" or "under" a second component, such a description includes both a case in which the two components are formed or disposed in direct contact with each other and a case in which one or more other components are interposed between the two components. In addition, when a first component is described as being formed "on or under" a second component, such a description may include a case in which the first component is formed at an upper side or a lower side with respect to the second component.

Hereinafter, one embodiment of a cowl will be described in detail with reference to the accompanying drawings, and when the embodiment is described with reference to the accompanying drawings, components that are the same or correspond to each other will be denoted by the same reference numerals, and redundant description thereof will be omitted.

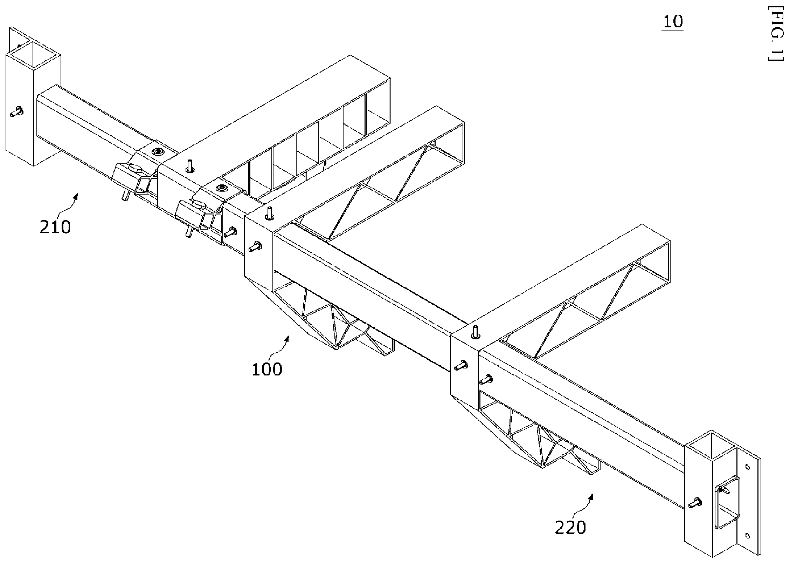

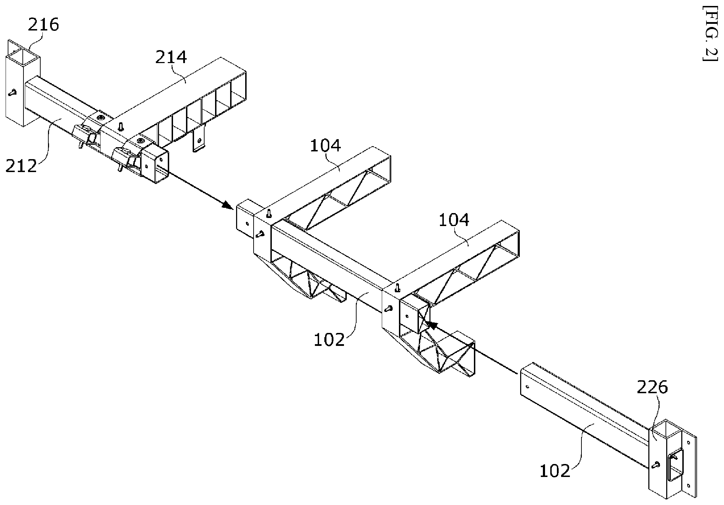

FIG. 1 is a perspective view illustrating a cowl assembly according to an embodiment of the present invention, and FIG. 2 is an exploded view illustrating the cowl assembly according to the embodiment.

A cowl assembly 10 serves as a frame of the front of a vehicle. A cockpit module is disposed in front of an interior of the vehicle. The cowl assembly 10 may constitute a frame of a cockpit in the cockpit and serve to support the cockpit and various components disposed inside the cockpit. An air module, an air conditioning apparatus, etc., may be disposed in the cockpit.

Referring to FIGS. 1 and 2, a total of three components may be assembled to form a cowl assembly 10 according to one embodiment of the present invention. A center cowl 100 and side cowls 200 may be assembled to form the cowl assembly 10. The side cowls 200 may include a first side cowl 210 disposed in front of a driver's seat and a second side cowl 220 disposed in front of a passenger seat.

The center cowl 100 is disposed at a center between the driver's seat and the passenger seat. The center cowl 100 may be disposed at a location corresponding to a center fascia.

The cowl assembly 10 may be formed to extend in the front of the vehicle in a width direction of the vehicle. The center cowl 100 and the side cowls 200 include pipes 102, 212, and 222, respectively. The pipes may be detachably attached to each other, and the connected pipes may extend in the width direction of the vehicle.

The pipes of the cowl assembly 10 may extend in the width direction of the vehicle, and brackets may be assembled to the pipes. The brackets serve to connect the pipes to a vehicle body or other components. The brackets may be assembled as a plurality of brackets. The plurality of brackets may be disposed in fastening portions of the pipes and connect the pipes to the vehicle body.

The cowl assembly 10 is a component covering an entire front region of the vehicle and corresponds to a component with a large volume. Accordingly, much cost, space, and time may be required to manufacture, store, and transport the cowl assembly 10. In addition, when a design change of the vehicle occurs, since the cowl assembly 10 which is integrally manufactured should be newly manufactured, it is difficult to easily respond to the design change.

The present invention provides the cowl assembly 10 which is assemblable according to required performance corresponding to specifications and a size of the vehicle. The assembly type cowl assembly 10 may be produced in a small space, and when a design change thereof occurs, the design change may be performed by changing and manufacturing only some components according to a corresponding design. When the vehicle is manufactured with any of various specifications corresponding to a usage and a user, the cowl assembly 10 is suitable for producing a small quantity and any of various types thereof.

As illustrated in FIG. 2, a plurality of cowls are assembled to form the cowl assembly 10 according to the present invention. As described above, the cowl assembly 10 may include the center cowl 100 and the side cowls 200. The side cowls 200 may include the first side cowl 210 and the second side cowl 220. The side cowls 200 may be assembled to both sides of the center cowl 100 to implement an integrally extending shape of the cowl assembly 10.

Each of the cowls includes the pipe and the bracket. A hole through which the pipe passes is formed in the bracket. The bracket and the pipe may be assembled by fitting the pipe into the hole of the bracket. The center cowl 100 includes a center pipe 102 and center brackets 104. The side cowls 200 include side pipes 212 and 222 and side brackets 214.

The center pipe 102 may be formed to be assembled with the side pipes 212 and 222. As an example, both ends of the center pipe 102 may be inserted into the side pipes 212 and 222. That is, outer diameters of both ends of the center pipe 102 may correspond to inner diameters of the side pipes 212 and 222. At least portions of the center pipe 102 may be inserted into the side pipes 212 and 222, and then the pipes may be fixed using separate fastening members 300. As an example, rivet bolts may be applied as the fastening members 300.

The center pipe 102 may be slidably inserted into and assembled to the side pipes 212 and 222. Similarly, the brackets may also be slidably assembled to the pipe.

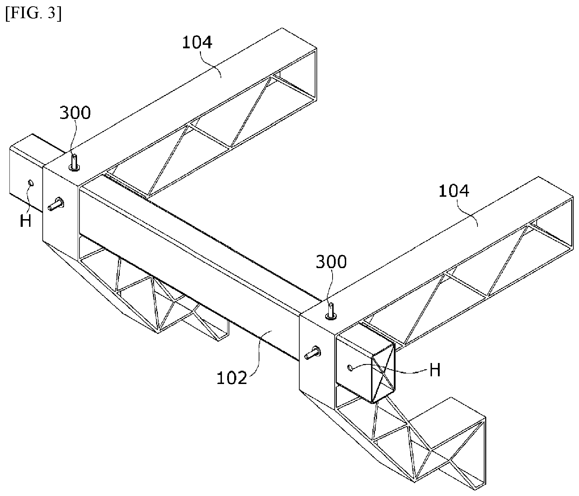

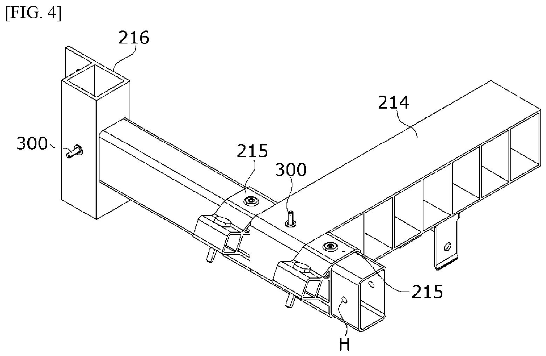

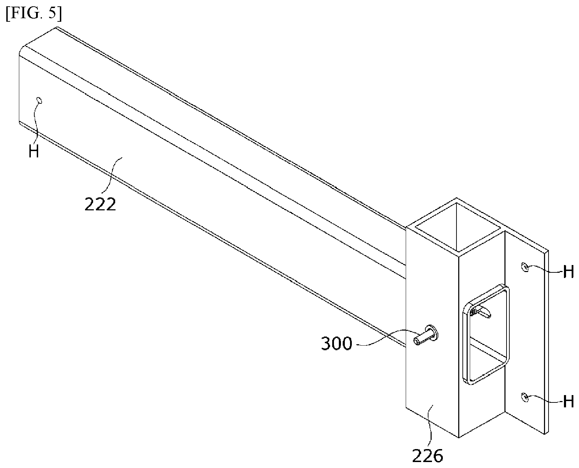

FIG. 3 is a view illustrating the center cowl of the cowl assembly according to the embodiment, and FIGS. 4 and 5 are views illustrating the side cowls of the cowl assembly according to the embodiment.

Referring to FIGS. 3 to 5, the cowls each include the pipes which serve as the frames and the brackets which connect the pipes to the vehicle body and the other components.

The center cowl 100 may include the center pipe 102 and the center brackets 104. The center brackets 104 may be formed to be bent to correspond to external shapes of regions in which the center cowl 100 is disposed. The center cowl 100 may be formed to be bent and avoid interference with other components in the cockpit.

The center brackets 104 may also be provided as a plurality of center brackets 104. In the case of FIG. 3, it is illustrated that two center brackets 104 disposed at a predetermined distance are assembled to the center pipe 102. The hole into which the center pipe 102 may be inserted may be formed in each of the center brackets 104. The center bracket 104 may slide on an outer perimeter of the center pipe 102 to move to a fastening location. When the center bracket 104 is disposed at the fastening location at which the center bracket 104 is fastened to the center pipe 102, the center bracket 104 may be fixed using a separate fastening member. The fastening location corresponds to a location at which a fastening hole H is formed.

The center pipe 102 may pass through the center bracket 104, and at least a portion of the center pipe 102 may be exposed to the other side of the center bracket 104. The exposed portion corresponds to a portion to which each of the side pipes 212 and 222 is assembled. That is, at least portions of the center pipe 102 extend toward both sides of the center cowl 100, and the side pipes 212 and 222 may be assembled to the center pipe 102 through the extending portions.

At least portions of the center pipe 102 are fixedly inserted into the side pipes 212 and 222, and regions from end portions of the center pipe 102 to locations at which the center brackets 104 are located may correspond to portions inserted into the side pipes 212 and 222. That is, after the center brackets 104 are assembled to the center pipe 102, the side pipes 212 and 222 may be fixed to the center pipe 102. The center pipe 102 is inserted into the side pipes 212 and 222 until coming into contact with the center brackets 104.

The first side cowl 210 disposed in front of the driver's seat is illustrated in FIG. 4, and the second side cowl 220 disposed in front of the passenger seat is illustrated in FIG. 5.

The side cowls 200 may include the side pipes 212 and 222 and a side bracket 214. Alternatively, a side bracket 214 may not be provided according to a location at which the side cowl 200 is disposed and arrangements of other components. The side cowls 200 may fix the cowl assembly 10 to both sides of the vehicle body. Accordingly, the side cowls 200 may include fixing brackets 216 and 226. The fixing brackets 216 and 226 are components which fix the side pipes 212 and 222 to the vehicle body.

As illustrated in FIG. 4, the first side cowl 210 disposed in front of the driver's seat includes the side pipe 212 and the side bracket 214 and the fixing bracket 216 which are assembled to the side pipe 212. The side bracket 214 may be formed in a shape different from a shape of the center bracket 104. Since a steering wheel, a handle, etc., for steering are disposed at a side of the driver's seat, the side bracket 214 may be fixedly fastened to a corresponding component and also formed to avoid interference with a corresponding component.

The side bracket 214 may slide on an outer perimeter of the side pipe 212, and be disposed at a fastening location thereof and fixed to the side pipe 212 using a separate fastening member 300. Auxiliary brackets 215 which fix a location of the side bracket 214 may be disposed on both sides of the side bracket 214. The auxiliary brackets 215 may serve to connect the side cowl 200 to another component. The auxiliary brackets 215 may be fixed to the side pipe 212 on both sides of the side bracket 214 and fix the side bracket 214.

As in FIG. 5, the second side cowl 220 disposed in front of the passenger seat may not include a separate side bracket 214. The second side cowl 220 may include the fixing bracket 226 fixed to the vehicle body. A hole through which the side pipe 222 may pass and a hole H which may be fastened to the vehicle body may be formed in the fixing bracket 226.

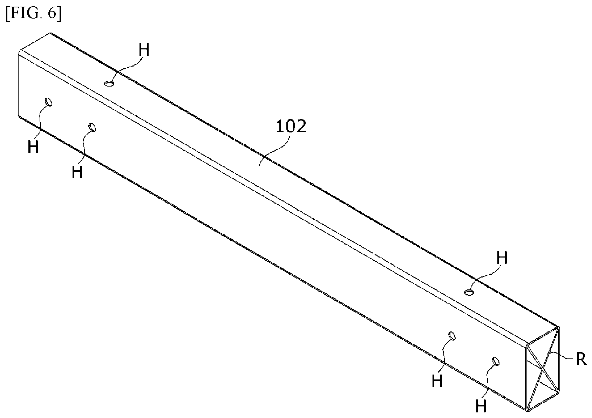

FIG. 6 is a view illustrating the pipe of the cowl assembly according to the embodiment.

The pipe illustrated in FIG. 6 corresponds to the center pipe 102 of the center cowl 100. A plurality of fastening holes H to which the side pipes 212 and 222 and the center bracket 104 may be fastened may be formed in the center pipe 102.

Fastening holes H may be formed in the side pipes 212 and 222 and the center bracket 104, and the center brackets 104 and the side pipes 212 and 222 may be moved such that the fastening holes H correspond to each other and fixed using the separate fastening members.

The fastening holes H may be formed as a plurality of fastening holes H disposed at predetermined distances. In the case of FIG. 6, the fastening holes H formed in both ends of the center pipe 102 are illustrated, and the fastening holes H may be formed in an entirety of the pipe so that the locations of the center brackets 104 may be changed.

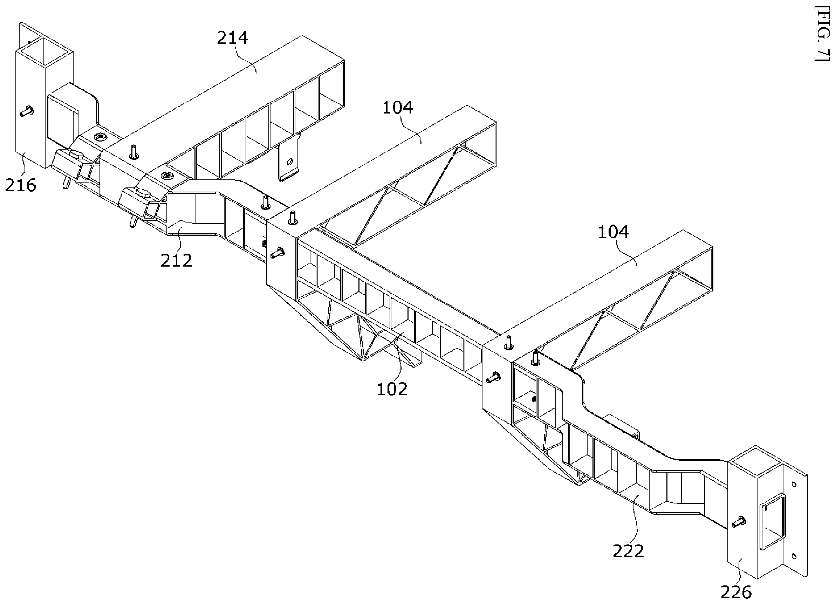

FIG. 7 is a view illustrating a cowl assembly formed by bending a pipe according to an embodiment.

A shape of a pipe of a cowl assembly 10 may be changed according to a shape of a cockpit or arrangements of other components. At least a portion of the pipe may be formed to be bent.

Referring to FIG. 7, at least portions of a first side pipe 212 and a second side pipe 222 are formed to be bent. In the case of the embodiment illustrated in FIG. 7, the embodiment may be implemented by using the conventional center cowl 100 and bending shapes of only the side pipes 212 and 222. This provides an advantage that only shapes of some desired components may be changed and applied thereto without changing all components.

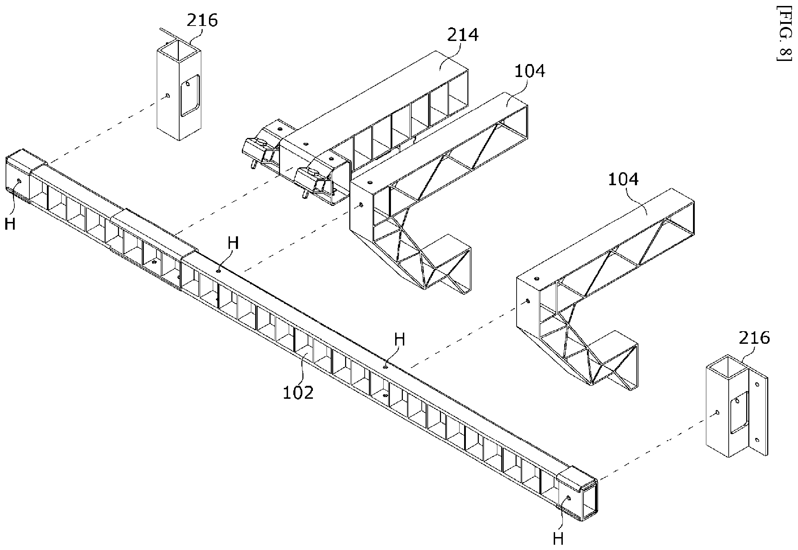

FIG. 8 is a view illustrating a cowl assembly with which a pipe is integrally formed according to an embodiment;

In the above-described embodiment, it has been illustrated that the total of three pipes 102, 212, and 222 are assembled in the cowl assembly 10. The cowl assembly 10 in which three pipes 102, 212, and 222 are assembled in a longitudinal direction to extend in the width direction of the vehicle may be implemented. Alternatively, as illustrated in FIG. 8, a pipe 102 may be integrally formed. The pipe 102 may be integrally formed to correspond to a width of a vehicle. Fastening holes disposed at predetermined distances may be formed in an outer perimeter of the pipe 102.

A location of a fastening hole H corresponds to a location at which a bracket is assembled. A user may adjust the location of the bracket by sliding the bracket on the outer perimeter from one side of the pipe such that a fastening hole formed in the bracket corresponds to the fastening hole formed in the pipe. Then, a fastening member 300 may pass through the fastening hole H to fix the pipe to the bracket.

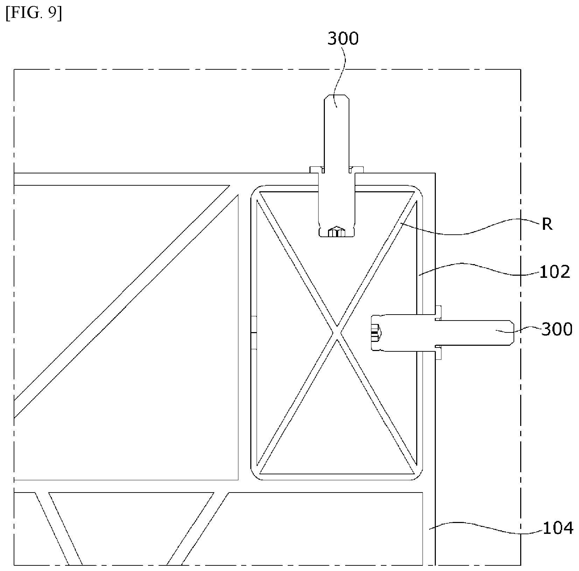

FIGS. 9 to 11 are views illustrating fastening portions of a pipe and a bracket according to an embodiment.

FIG. 9 is a view illustrating fastening portions of a center pipe 102 and a center bracket 104. At least a portion of the center pipe 102 may be inserted into the center bracket 104. A size of an insertion hole formed in the center bracket 104 may correspond to an outer perimeter of the center pipe 102.

After the center pipe 102 is inserted into the center bracket 104, fastening members 300 may pass through the center pipe 102 and the center bracket 104 to fix the center pipe 102 to the center bracket 104. Arrangements of the fastening members 300 may be determined according to a shape of the bracket. In the case of the present embodiment, since the center bracket 104 is formed to extend toward both sides, the fastening members 300 may be disposed on a surface of the outer perimeter of the rectangular-shaped center pipe 102 on which the center bracket 104 does not extend.

As illustrated above, rivet bolts may be applied to the fastening members 300. When the rivet bolts are applied thereto, fastening portions may be prevented from being slackly loosened due to vibrations. Since a vehicle continuously applies vibrations thereto when starting and traveling, a cowl assembly 10 may be fixed by the rivet bolts to deal with the vibrations.

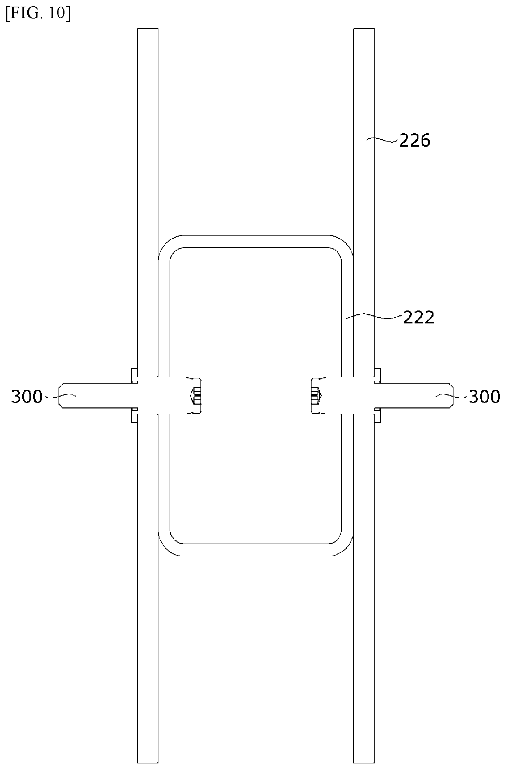

FIG. 10 is a view illustrating fastening portions of a side pipe 222 and a fixing bracket 226. The fixing bracket 226 is located on an end of the side pipe 222, and at least a portion of the side pipe 222 is inserted into the fixing bracket 226. In a state in which the side pipe 222 is inserted into the fixing bracket 226, rivet bolts may fasten the side pipe 222 to the fixing bracket 226.

The rivet bolts may be disposed on two facing surfaces of the side pipe 222, respectively. Unlike the center bracket 104 or a side bracket 214, the fixing bracket 226 may be assembled to the side pipe 222 in a state in which two surfaces thereof are in contact with the side pipe 222.

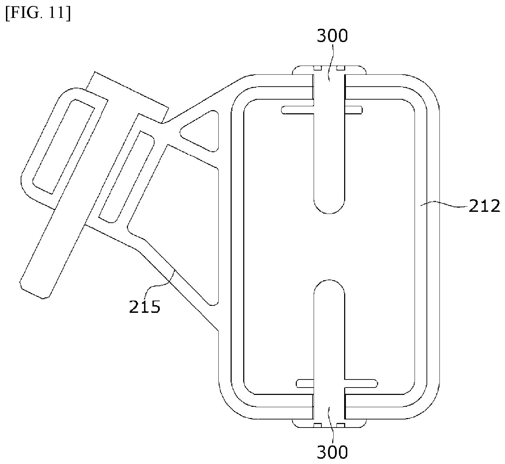

FIG. 11 is a view illustrating fastening portions of a side pipe 212 and an auxiliary bracket 215. The auxiliary bracket 215 may be disposed to surround an outer side of the side pipe 212. That is, the side pipe 212 may be disposed to pass through the auxiliary bracket 215. In a state in which the side pipe 212 passes through the auxiliary bracket 215, rivet bolts may pass through the side pipe 212 and the auxiliary bracket 215 to fix the side pipe 212 to the auxiliary bracket 215.

Fastening members 300 may be disposed to correspond to a surface of the auxiliary bracket 215 formed to be flat. In the case of FIG. 11, the fastening members 300 disposed on upper and lower surfaces of the auxiliary bracket 215 are illustrated in the drawing.

Different types of fastening members may also be applied thereto. Shapes of the rivet bolts illustrated in FIG. 10 and the rivet bolts illustrated in FIG. 11 are different. Different rivet bolts or different fastening units may be used according to the fastening portions.

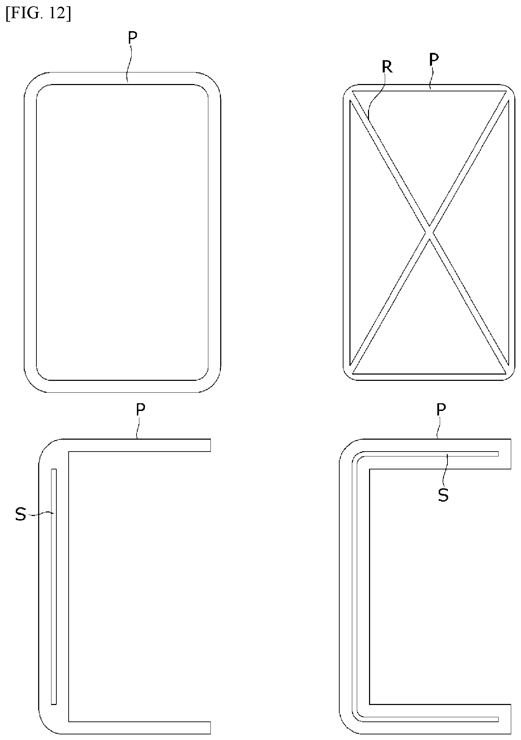

FIG. 12 is cross-sectional views illustrating pipes according to embodiments.

A pipe P according to an embodiment may be formed in a hollow shape.

A pipe P according to an embodiment may be formed in a hollow shape, and a support rib R may be formed inside the pipe P. The support rib R may be formed in an "X" shape to secure stiffness of the pipe P. The support rib R may be formed to extend with the pipe P in a longitudinal direction of the pipe P. The shape of the support rib R is not limited. The support rib R may be formed in a cross shape instead of the "X" shape.

A pipe P according to an embodiment may be formed in a shape of which at least a portion is bent. The pipe P illustrated in a lower side of FIG. 12 is formed in a shape of which one side is open. Three surfaces are disposed to be perpendicular to each other, and the remaining one surface is formed to be open. A stiffener S may be inserted into at least a portion of three surfaces. In this case, the pipe P may be manufactured by being injected in a state in which the stiffener S is inserted thereinto.

The stiffener S may be formed of a steel material. The stiffener S may extend in a longitudinal direction of the pipe P. A shape of a cross section of the stiffener S may correspond to a shape of a cross section of the pipe P. Alternatively, a shape of the cross section of the stiffener S may correspond to at least a portion of the cross section of the pipe P.

In the case of the pipe P of which one surface is open, as illustrated in FIG. 8 or the like, a support rib R may be formed. The support rib R may serve to support the open surface of the pipe P. The support rib R may be formed as a plurality of support ribs R disposed at predetermined distances. When the support rib R is formed, the pipe P may be manufactured in a shape in which a type of partition is formed.

According to one embodiment of the present invention, since a center cowl and a side cowl are formed to be assembled while a bracket slides on an outer side of a pipe, a cowl assembly is easily manufactured, manufacturing costs thereof can be reduced, and the cowl assembly can easily respond to a design change.

The various and useful advantages of the present invention are not limited to the above-described content and might be more easily understood from the description of the specific embodiments of the present invention.

While the present invention has been described above with reference to specific embodiments of the present invention, it may be understood by those skilled in the art that various modifications and changes of the present invention may be made within a range not departing from the spirit and scope of the present invention defined by the appended claims.

## Claims

1. A cowl assembly comprising:
a center cowl including a center pipe extending in a width direction of a vehicle body; and
a side cowl including a side pipe detachably attachable to the center pipe,
wherein at least one portion of the center pipe is inserted into the side pipe, and
a first fastening member passing through the center pipe and the side pipe in a state in which the center pipe is inserted into the side pipe fixes the center cowl to the side cowl.

2. The cowl assembly of claim 1, wherein the side cowl includes:
a first side cowl disposed in front of a driver's seat; and
a second side cowl disposed in front of a passenger seat.

3. The cowl assembly of claim 1 or 2, wherein:
the center cowl includes a center bracket which surrounds an outer side of the center pipe and slides on and is assembled to a surface of an outer perimeter of the center pipe; and
the side cowl includes a side bracket which surrounds an outer side of the side pipe and slides on and is assembled to a surface of an outer perimeter of the side pipe.

4. The cowl assembly of claim 3, wherein:
fastening holes disposed at predetermined distances are formed in the center pipe and the side pipe; and
the bracket slides to a location corresponding to the fastening holes and then is fixed by a fastening member.

5. The cowl assembly of any one of claims 1 to 4, wherein at least one portion of the side pipe corresponding to a shape of a cockpit is formed to be bent.

6. The cowl assembly of any one of claims 1 to 5, wherein a support rib is formed inside each of the center pipe and the side pipe.

7. The cowl assembly of any one of claims 1 to 6, wherein a steel stiffener is insertion-injected to form each of the center pipe and the side pipe.

8. The cowl assembly of any one of claims 3 to 7, wherein:
the center pipe and the side pipe are integrally formed; and
the center bracket and the side bracket slide on the pipe and are fastened at predetermined locations.

9. The cowl assembly of any one of claims 1 to 8, wherein:
a fixing bracket which fixes the side cowl to the vehicle body is fastened to an end of the side pipe; and
the side pipe is fastened to the fixing bracket in a state in which at least a portion of the side pipe is inserted into the fixing bracket.
